# EUROPÄISCHE PATENTANMELDUNG

(11) **EP 4 167 083 A1**
(43) Veröffentlichungstag der Anmeldung: **19.04.2023**
(21) Anmeldenummer: 22197061.9
(22) Anmeldetag: 22.09.2022
(51) Int. Cl.: G06F 9/451, H05B 6/64, A47L 15/42, D06F 34/32

(54) **ANZEIGE FÜR EIN HAUSHALTSGERÄT**

(30) Priorität: 12.10.2021 DE 102021211464
(71) Anmelder: BSH Hausgeräte GmbH, 81739 München (DE)
(72) Erfinder: Berenbrinker, Sarah-Loren, 81245 München (DE); Harrer, Sabine, 85653 Aying (DE); Schmidt, Tobias, 82211 Herrsching (DE); Schönfuss, Katja, 81677 München (DE)

(57) **Zusammenfassung**

Ein Verfahren zum Bereitstellen einer Information an einem Haushaltsgerät umfasst Schritte des Erfassens eines Betriebsparameters des Haushaltsgeräts; des Bereitstellens einer graphischen Repräsentation des Betriebsparameters; des Bestimmens einer Fläche zur Aufnahme der Repräsentation; und des Anordnens der Repräsentation auf einer Anzeigefläche, sodass die Fläche an eine weitere Fläche zur Aufnahme einer weiteren Repräsentation angrenzt.

## Beschreibung

Die Erfindung betrifft eine Anzeige für ein Haushaltsgerät. Insbesondere betrifft die Erfindung eine optische Anzeige zur Ausgabe von alphanumerischen Informationen.

Ein Haushaltsgerät umfasst eine optische Anzeige zur Ausgabe von Informationen. Zunehmend werden graphische Anzeigen verwendet, die eine flexible Anzeige symbolischer und alphanumerischer Informationen erlauben. Soll das Haushaltsgerät in unterschiedlichen Ländern eingesetzt werden, so können in Textform darzustellende Informationen jeweils in der passenden Sprache bereitgestellt sein.

Dieselbe inhaltliche Information, beispielsweise ein Betriebsmodus eines Backofens, kann in unterschiedlichen Sprachen unterschiedlich lange Worte oder Ausdrücke erfordern, die unterschiedlich viel Platz auf der Anzeige erfordern. Bislang wurde versucht, für eine Information die maximal erforderliche Anzeigefläche zu bestimmen und dann in den verschiedenen Sprachen jeweils mehr oder weniger auszunutzen. Dabei mussten gelegentlich Begriffe abgekürzt oder durch kürzere, aber weniger gut passende Vokabeln ausgedrückt werden.

Eine der vorliegenden Erfindung zu Grunde liegende Aufgabe besteht in der Bereitstellung einer verbesserten Technik zur flexiblen optischen Ausgabe von Informationen an einem Haushaltsgerät. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Verfahren zum Bereitstellen einer Information an einem Haushaltsgerät Schritte des Erfassens eines Betriebsparameters des Haushaltsgeräts; des Bereitstellens einer graphischen Repräsentation des Betriebsparameters; des Bestimmens einer Fläche zur Aufnahme der Repräsentation; und des Anordnens der Repräsentation auf einer Anzeigefläche, sodass die Fläche an eine weitere Fläche zur Aufnahme einer weiteren Repräsentation angrenzt.

Erfindungsgemäß kann der Betriebsparameter unabhängig von der Art, in der er repräsentiert wird, genau so viel Platz auf der Anzeigefläche einnehmen wie er benötigt. Die bestimmte Fläche kann stets die optimale Größe aufweisen. Bevorzugt hat die Fläche eine rechteckige Form und auch die weitere Fläche ist bevorzugt rechteckig. Durch dynamisches Anordnen der Flächen beziehungsweise der von ihnen umfassten Repräsentationen auf der Anzeigefläche kann diese verbessert genutzt werden. Die Flächen können so angeordnet werden, dass ein Verschnitt minimiert ist. Freigelassener Platz kann gesammelt und zur Bereitstellung einer weiteren Repräsentation einer Information genutzt werden. Ein Benutzer kann das Haushaltsgerät verbessert in Abhängigkeit der bereitgestellten Informationen nutzen und insbesondere steuern.

In einer Ausführungsform können die Fläche und die weitere Fläche Informationen unterschiedlicher Einträge in einem gemeinsamen Menü darstellen.

Die Repräsentation kann in Abhängigkeit einer Größe und/oder Auflösung der Anzeigefläche erfolgen. Beispielsweise kann das Haushaltsgerät mit verschiedenen Anzeigen ausgestattet werden, die unterschiedlich große Anzeigeflächen, graphische Auflösungen und/oder Farben darstellen können. Die Repräsentation kann dynamisch bezüglich der jeweils verwendeten Anzeige bestimmt werden, sodass das Verfahren ohne Änderungen mit verschiedenen Anzeigen durchgeführt werden kann. So können auch zwei Haushaltsgeräte mit unterschiedlichen Anzeigen dasselbe Verfahren ausführen. Es kann sogar möglich sein, eine Anzeige an einem Haushaltsgerät durch eine andere zu tauschen, die andere graphische Fähigkeiten aufweist.

Bevorzugt wird der Betriebsparameter alphanumerisch repräsentiert. In Unterformen kann auch eine nur numerische oder nur textuelle Repräsentation gewählt sein. So kann die Repräsentation beispielsweise in Abhängigkeit einer vorbestimmten Landessprache passend ausgedrückt werden, wobei sich die Größe und/oder Form der Fläche ändern kann. So kann eine multilinguale Ausgabe textueller Informationen verbessert realisiert sein. Die andere Repräsentation kann ebenfalls alphanumerisch oder auch symbolisch sein.

An unterschiedlichen Haushaltsgeräten können jeweils vorbestimmte Betriebsparameter verwendet werden. Beispielhafte Betriebsparameter an einem Ofen umfassen eine Temperatur, eine Heizart (etwa Oberhitze, Unterhitze, Umluft, Grill, Dampf etc.), eine Startzeit, eine Gardauer oder eine Endzeit. An einem Toaster können beispielhafte Betriebsparameter eine Betriebsart (etwa Auftauen, Bräunen, Aufbacken) einen Bräunungspunkt beziehungsweise eine Heizdauer betreffen. An einer Dunstabzugshaube können eine Filterart (Fett, Dampf, Partikel), eine Lüftungsstufe oder ein Status einer Beleuchtung als Betriebsparameter dargestellt werden. Andere Haushaltsgeräte können andere oder zusätzlich darzustellende Betriebsparameter umfassen.

Die Repräsentation kann unter Beachtung eines durch einen Benutzer vorgegebenen Parameters erfolgen. Der Parameter kann eine Sprache betreffen, in welcher er textuelle Nachrichten, Einstellungen oder Hinweise erhalten möchte. Der Parameter kann auch die Größe von Lettern oder Zeichen betreffen, sodass beispielsweise eine weitsichtige Person eine vergrößert dargestellte Nachricht leichter erfassen kann.

Die Repräsentation kann unter Beachtung eines Attributs erfolgen. Beispielhafte Attribute umfassen eine Schriftgröße, einen Schriftschnitt oder ein Textattribut wie Kursiv, Fett oder Unterstrichen. Die Attribute können in unterschiedlichen Sprachen unterschiedlich gewählt sein, um beispielsweise in einer Sprache mit relativ langen Vokabeln Platz einzusparen oder in einer Sprache mit relativ kurzen Vokabeln eine verbesserte Anordnung, Gliederung oder Hierarchisierung der Informationen zu erreichen.

Eine Größe und/oder eine Form der Fläche kann von dem vorbestimmten Parameter und/oder dem Attribut abhängen. Umgekehrt kann das Attribut auch durch den Parameter bestimmt sein. Beispielsweise könnte ein Parameter gesetzt werden, wenn ein Benutzer eine Leseschwäche hat, wobei bestimmte, leicht verwechselbare Lettern wie ,d' und ,b' hervorgehoben dargestellt werden. Die Hervorhebung kann beispielsweise zusätzlichen Platz zu einer vorangehenden oder folgenden Letter, einen Fettdruck umfassen. Auch in ihren Umrissen ähnlich aussehende Wörter können verbessert so dargestellt werden, dass sie weniger leicht miteinander verwechselt werden können.

Je mehr Platz die einzelnen Repräsentationen erfordern, desto weniger Repräsentationen können auf einer vorbestimmten Anzeigefläche gleichzeitig dargestellt werden. Eine Anzahl von auf der Anzeigefläche darstellbaren Flächen kann aber auch in Abhängigkeit von dem vorbestimmten Parameter und/oder dem Attribut veränderlich sein. Beispielsweise kann ein Benutzer angeben, wie viele Einträge in einem Menü er gleichzeitig zu sehen wünscht. Je weniger Einträge dies sind, desto größer können Abstände zwischen den Einträgen und/oder desto größer können die Einträge selbst dargestellt werden.

Die Repräsentation kann derart auf der Anzeigefläche angeordnet werden, dass die Repräsentation vollständig dargestellt wird. So kann verhindert werden, dass unvollständige oder unleserliche Informationen bereitgestellt werden. An einer vorbestimmten Stelle nicht vollständig darstellbare Informationen können an einer anderen Stelle ausgegeben werden, beispielsweise in einer neuen Zeile oder einer anderen Spalte, oder ganz weggelassen werden.

In einer anderen Ausführungsform kann eine unvollständige Darstellung einer Repräsentation toleriert werden, wenn ein nicht dargestellter Teil der Fläche nicht größer als ein vorbestimmter Anteil der Fläche ist.

Die Fläche kann derart bestimmt werden, dass ein vorbestimmter Abstand zwischen der Repräsentation und einer angrenzenden Fläche besteht. So kann beispielsweise nach einem Wort ein horizontaler Abstand erzwungen werden, um ein unerwünschtes Kombinieren mit einem nachfolgenden Wort zu verhindern. Der Abstand kann in einer oder in mehreren Richtungen vorgegeben sein. Bei einer rechteckigen Fläche kann der Abstand beispielsweise nach oben, nach unten, nach rechts oder nach links vorbestimmt sein. Abstände können auch gruppiert vorgegeben werden, beispielsweise in vertikaler oder horizontaler Richtung oder in allen Richtungen.

Die Fläche kann derart bestimmt werden, dass ein vorbestimmter Abstand zwischen der Repräsentation und einer Begrenzung der Anzeigefläche besteht. So kann beispielsweise ein eingehaltener rechter Rand darauf hinweisen, dass ein dargestelltes Wort nicht unvollständig angezeigt ist. Durch das Einhalten eines Abstands zur Begrenzung der Anzeigefläche kann eine verbesserte Gliederung von Informationen erreicht werden, sodass ein Benutzer die Informationen leichter, schneller oder sicherer aufnehmen kann.

In einer weiteren Ausführungsform wird eine Vielzahl von Flächen zur Aufnahme zugeordneter Repräsentationen von Informationen angeordnet. Eine oder mehrere Flächen können leer sein, um eine vorbestimmte Gliederung anderer Flächen zu unterstützen. Dabei können unterschiedliche Strategien zur Anordnung von Flächen angewandt werden. Bevorzugt sind die Flächen hierarchisch organisiert und in jeder Hierarchieebene kann eine Strategie zur Anordnung vorbestimmt sein. Eine beispielhafte Strategie umfasst das Anordnen von Flächen in einer Zeile, wobei eine neue Zeile eröffnet wird, wenn eine bestehende gefüllt ist. Die Flächen können dabei eine vorbestimmte Reihenfolge aufweisen oder auch umorganisiert werden. Andere beispielhafte Strategien umfassen das Anordnen von Flächen in Spalten, in einer Matrix oder einem Raster.

In einer bevorzugten Ausführungsform sind mehrere Flächen in einer Fläche zusammengefasst. So können die unterschiedlichen Hierarchieebenen verbessert durchgesetzt werden. Jeder umschließenden Fläche kann eine Strategie zur Anordnung von umfassten Flächen zugeordnet sein. In einer Ausführungsform ist eine Anzahl Ebenen in der Hierarchie begrenzt.

In einer besonders bevorzugten Ausführungsform deckt eine zusammenfassende Fläche die gesamte Anzeigefläche ab. Diese Fläche kann in der Hierarchie an höchster Stelle stehen. So können unterschiedliche Anzeigen oder unterschiedliche Orientierungen derselben Anzeige eingesetzt werden, ohne dass die Ausgabe von Informationen an eine Änderung der Anzeige angepasst werden muss. Unterschiedliche Haushaltsgeräte können so verbessert mit derselben Technik ausgestattet werden. Entwicklungs- oder Herstellungskosten können verringert sein.

Nach einem weiteren Aspekt der vorliegenden Erfindung umfasst eine Vorrichtung zur Steuerung eines Haushaltsgeräts eine Einrichtung zur Erfassung eines Betriebsparameters des Haushaltsgeräts; eine Anzeige mit einer vorbestimmten Anzeigefläche; und eine Verarbeitungseinrichtung, die dazu eingerichtet ist, eine graphische Repräsentation des Betriebsparameters bereitzustellen; eine Fläche zur Aufnahme der Repräsentation zu bestimmen; und die auf der Anzeigefläche anzuordnen, sodass die Fläche an eine weitere Fläche zur Aufnahme einer weiteren Repräsentation angrenzt.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Die Erfindung wird nun unter Bezug auf die beiliegenden Figuren genauer beschrieben, in denen:
- Figur 1: ein Haushaltsgerät;
- Figur 2: ein Ablaufdiagramm eines Verfahrens; und
- Figur 3: beispielhafte Ausgaben auf einer Anzeige
darstellt.

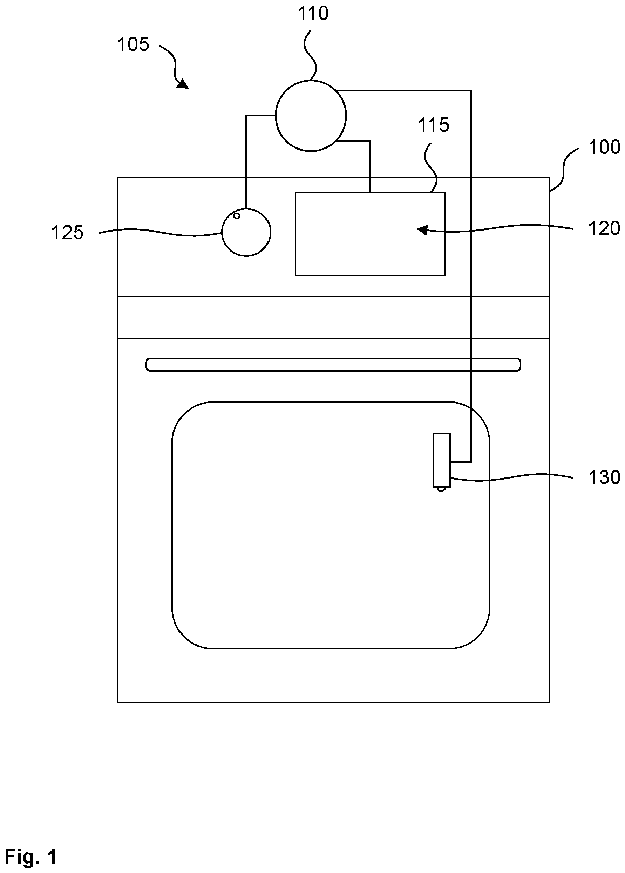

Figur 1 zeigt ein beispielhaftes Haushaltsgerät 100 mit einer Steuervorrichtung 105. Vorliegend ist das Haushaltsgerät 100 als Backofen ausgelegt; in anderen Ausführungsformen kann es auch ein beliebiges anderes in einem Haushalt zu betreibendes Gerät umfasst sein, beispielsweise ein Herd, eine Waschmaschine, ein Wäschetrockner oder ein Geschirrspüler. Besonders geeignet ist die vorliegende Erfindung für Haushaltsgeräte 100, an denen mehrere Betriebsparameter, Messwerte oder Einstellungen gleichzeitig angezeigt werden sollen.

Die Steuervorrichtung 105 umfasst eine Verarbeitungseinrichtung 110, die mit einer graphikfähigen Anzeige 115 verbunden ist, die eine vorbestimmte Anzeigefläche 120 aufweist. Die Anzeigefläche 120 kann berührungsempfindlich sein und die Anzeige 115 kann einen Touchscreen umfassen. Ferner können ein Bedienelement 125 und/oder ein Sensor 130 vorgesehen sein. Ein gewünschter oder ein bestehender Betriebszustand des Haushaltsgeräts 100 kann mittels des Bedienelements 125 und/oder des Sensors 130 bestimmt werden.

Es wird vorgeschlagen, dass darzustellende Informationen, die sich insbesondere auf einen Betriebszustand des Haushaltsgeräts 100 beziehen, dynamisch auf der Anzeige 115 angeordnet werden. Dabei soll insbesondere berücksichtigt werden, dass ein Platzbedarf einer Information in Abhängigkeit eines vorbestimmten Parameters variieren kann. Zumindest einige der Informationen können sprachlich ausgedrückt sein, wobei ein Platzbedarf beispielsweise in Abhängigkeit einer gewählten Sprache unterschiedlich groß sein kann.

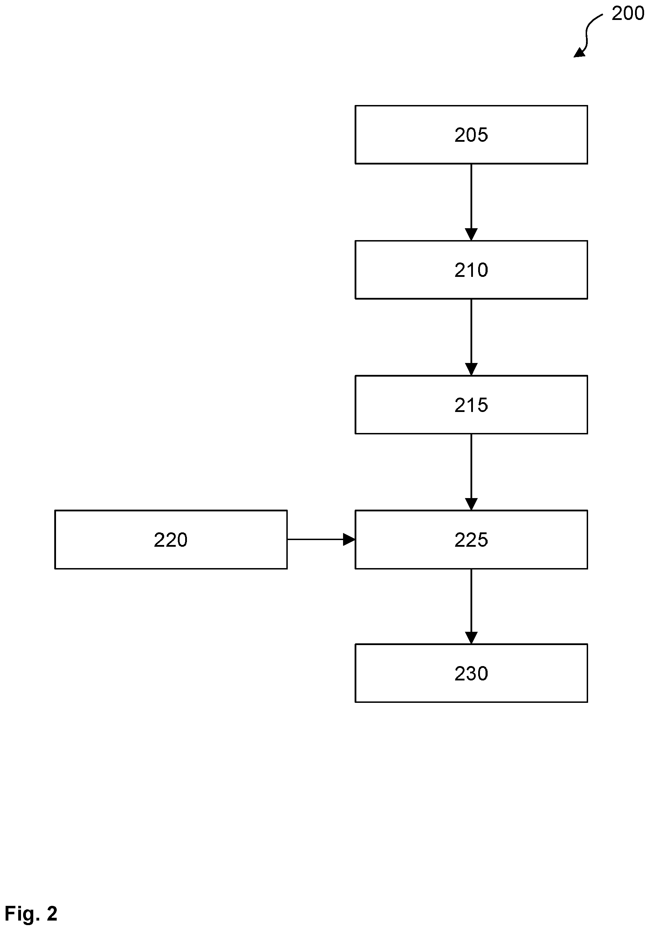

Figur 2 zeigt ein Ablaufdiagramm eines Verfahrens 200 zur Bereitstellung von Informationen auf einer Anzeige 115. In einem Schritt 205 kann eine auf der Anzeige 115 darzustellende Information erfasst werden. Die Information kann insbesondere in Textform vorliegen und ist in einer Ausführungsform alphanumerisch darstellbar. Die Information kann in Abhängigkeit eines vorbestimmten Parameters vorliegen. Beispielsweise kann die Information als Text vorliegen, der in Abhängigkeit einer gewählten Sprache bestimmt ist. Die Information kann also immer dieselbe sein, während die gewählte Sprache die textuelle Repräsentation beeinflussen kann.

In einem Schritt 210 kann ein Attribut der Information bestimmt werden. Das Attribut kann eine Darstellung des Texts beeinflussen und beispielsweise eine Anzeigefarbe oder eine Textgröße betreffen.

In einem Schritt 215 kann eine Fläche bestimmt werden, auf welcher die Information in Textform dargestellt werden kann. Die Fläche ist bevorzugt rechteckig und weiter bevorzugt so bestimmt dass der Informationstext unter den vorliegenden Anforderungen oder Attributen vollständig in ihr aufgenommen werden kann. Die Fläche kann um ein vorbestimmtes Maß größer als der Informationstext sein, wobei das Maß in unterschiedlichen Richtungen separat vorbestimmt sein kann. In einer Ausführungsform betrifft die Fläche das kleinste Rechteck, in welchem der Informationstext vollständig aufgenommen sein kann. Die Fläche ist bevorzugt fest bestimmt; in einer weiterführenden Ausführungsform kann sie jedoch auch unterschiedliche Formen oder Größen aufweisen, beispielsweise wenn der Informationstext in der Fläche umgebrochen wird. Dabei kann der Informationstext nach vorbestimmten Regeln getrennt werden, üblicherweise im Rahmen einer Silbentrennung.

In einem Schritt 220 können eine oder mehrere weiteren auf der Anzeige 115 darzustellende Informationen bestimmt werden. Dabei kann es sich jeweils um eine Textinformation oder eine andere, beispielsweise numerische oder symbolische Information handeln. Die Information kann letztlich immer graphisch repräsentiert werden, wobei die Repräsentation eine Fläche erfordert, die eine vorbestimmte Form und Größe aufweist.

In einem Schritt 225 können die Formen der darzustellenden Informationen auf der Anzeigefläche 120 angeordnet werden. Dabei kann eine Strategie zur Anordnung berücksichtigt werden, beispielsweise indem versucht wird, mehrere Flächen in einer Zeile oder in einer Spalte anzuordnen. Die Anordnung kann hierarchisch erfolgen, sodass mehrere gemeinsam darzustellende Formen zusammen in einer übergeordneten Form zusammengefasst werden können, die dann zusammen mit einer anderen Form auf der Anzeigefläche 120 angeordnet werden kann.

Mehrere Formen können in einer vorbestimmten Form angeordnet werden. Die vorbestimmte Form kann einen vorbestimmten Teil der Anzeigefläche 120 oder sogar die gesamte Anzeigefläche 120 abdecken. Dabei kann eine übergeordnete Form in Abhängigkeit einer verfügbaren Anzeigefläche 120 einer verwendeten Anzeige 115 dynamisch bestimmt werden.

In einem Schritt 230 können Repräsentationen der Informationen in Abhängigkeit der Anordnung der ihnen zugeordneten Formen auf der Anzeigefläche 120 ausgegeben werden, sodass die Informationen auf der Anzeige 115 sichtbar sind.

Es ist zu beachten, dass die Aufteilung der Anzeigefläche 120 nach einem ersten Durchlauf des Verfahrens 200 konstant gehalten oder erneut bestimmt werden kann, wenn sich eine der darzustellenden Informationen ändert. Betrifft beispielsweise eine der Informationen eine Temperatur in einem Garraum eines Ofens 100 so kann eine erste Aufteilung bezüglich einer mit zwei Dezimalstellen darstellbaren Temperatur bestimmt werden. Steigt die Temperatur weiter an, sodass zu ihrer numerischen Repräsentation drei Stellen erforderlich sind, kann die für die Temperatur zuvor bestimmte Fläche mit einer verkleinerten Repräsentation der Zahl genutzt werden, oder der Information kann eine vergrößerte Fläche zugeteilt werden, wobei Flächen anderer Informationen unter Umständen ebenfalls angepasst und/oder anders angeordnet werden können. Zur neuen Aufteilung kann das Verfahren 200 entsprechend erneut durchlaufen werden.

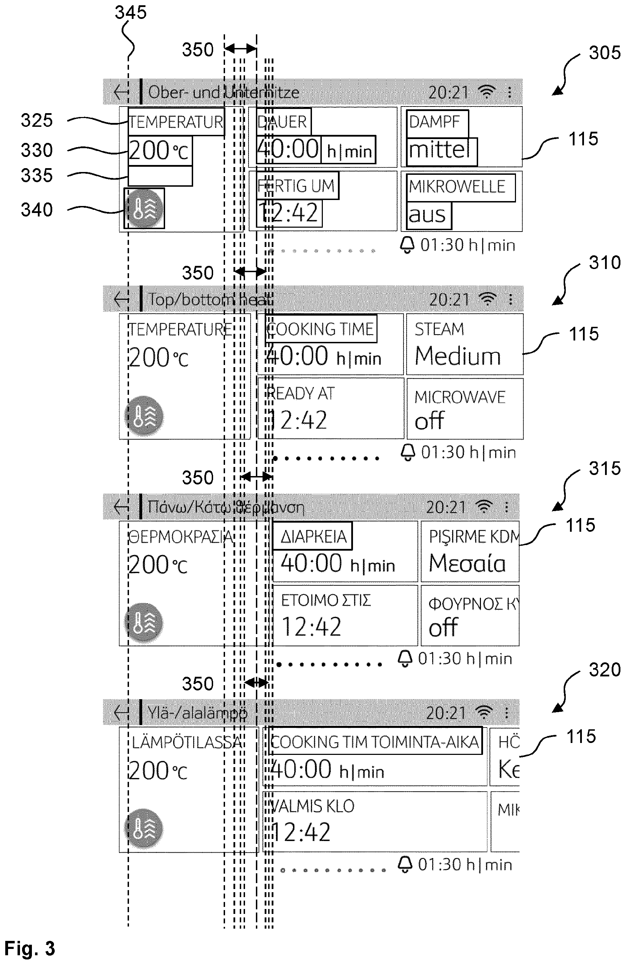

Figur 3 zeigt beispielhafte Darstellungen auf einer Anzeige 115 in verschiedenen, beispielhaften Sprachen. Die verwendeten Texte sind als exemplarisch zu betrachten. Von oben nach unten ist eine erste Darstellung 305 in deutscher, eine zweite Darstellung 310 in englischer, eine dritte Darstellung 315 in griechischer und eine vierte Darstellung 320 in finnischer Sprache dargestellt. Der dargestellte Informationsgehalt ist dabei immer gleich.

In der deutschen Darstellung 305 sind beispielhafte Flächen für einige der dargestellten Informationen eingezeichnet. Eine erste Fläche 325 umschließt den Text "Temperatur", eine zweite Fläche 330 eine numerische Angabe der aktuellen Temperatur, gefolgt von einer Angabe einer Einheit (vorliegende "°C"), eine dritte Fläche 335 ist leer, um einen vorbestimmten vertikalen Abstand herzustellen, und eine vierte Fläche 340 umschließt ein graphisches Symbol für einen gewählten Betriebsmodus.

Die Flächen 325 - 340 sind in der genannten Reihenfolge von oben nach unten angeordnet. Linke Begrenzungen der Flächen 325 - 335 liegen an einer vorbestimmten vertikalen Linie 345. Weiter rechts ebenfalls vertikal übereinander angeordnete Informationen sind ebenfalls linksbündig. Für eine der Informationen (Text "Dauer" in der deutschen Darstellung 305; entsprechende Texte in den Darstellungen 310 - 320) ist eine korrespondierende Fläche eingezeichnet. Ein Abstand 350 zwischen einer rechten Begrenzung einer linken Fläche 325 - 340 und den linken Begrenzungen der rechten Informationen ist in allen Darstellungen 305 - 320 gleich. Da jedoch die jeweils rechte Begrenzung der linken Informationen in den unterschiedlichen Sprachen unterschiedlich weit rechts liegt, beginnen die rechten Informationen in den Darstellungen 305 - 320 ebenfalls an unterschiedlichen Stellen. Noch weiter rechts dargestellte Informationen sind in den Darstellungen 315 und 320 daher nicht mehr vollständig sichtbar. Es ist zu beachten, dass das nur teilweise Darstellen von Flächen beziehungsweise Repräsentationen von Informationen in einer anderen Ausführungsform nicht oder nur innerhalb vorbestimmter Grenzen unterstützt werden kann. Unter Umständen muss dann eine neue Anordnung gefunden werden, die anzuzeigende Flächen auf der Anzeigefläche 120 ausreichend repräsentiert. Ein Text kann auch in einer ihm zugewiesenen Fläche 325 - 340 umgebrochen werden. In der dargestellten Ausführungsform

In einer Ausführungsform ist eine inhaltliche Reihenfolge über Flächen vorbestimmt. Dabei können, beginnend bei der am höchsten bewerteten Fläche, der Reihe nach möglichst viele der Flächen auf der Anzeigefläche 120 angeordnet werden. Flächen, die keinen Platz finden, können nicht dargestellt werden.

Bezugszeichen
- 100: Haushaltsgerät
- 105: Steuervorrichtung
- 110: Verarbeitungseinrichtung
- 115: Anzeige
- 120: Anzeigefläche
- 125: Bedienelement
- 130: Sensor

- 200: Verfahren
- 205: alphanumerische Information erfassen
- 210: Attribut bestimmen
- 215: umgebendes Rechteck erstellen
- 220: weitere darzustellende Flächen bestimmen
- 225: Flächen auf Anzeigefläche anordnen
- 230: Flächen ausgeben

- 305: erste Darstellung: Deutsch
- 310: zweite Darstellung: Englisch
- 315: dritte Darstellung: Griechisch
- 320: vierte Darstellung: Finnisch

- 325: erste Fläche: "Temperatur"
- 330: zweite Fläche: Temperatur
- 335: dritte Fläche: leer
- 340: vierte Fläche: Symbol für Betriebsmodus

- 345: Linie
- 350: Abstand

## Patentansprüche

1. Verfahren zum Bereitstellen einer Information an einem Haushaltsgerät, wobei das Verfahren folgende Schritte umfasst:
- Erfassen eines Betriebsparameters des Haushaltsgeräts;
- Bereitstellen einer graphischen Repräsentation des Betriebsparameters;
- Bestimmen einer Fläche zur Aufnahme der Repräsentation;
- Anordnen der Repräsentation auf einer Anzeigefläche, sodass die Fläche an eine weitere Fläche zur Aufnahme einer weiteren Repräsentation angrenzt.

2. Verfahren nach Anspruch 1, wobei der Betriebsparameter alphanumerisch repräsentiert wird.

3. Verfahren nach Anspruch 2, wobei die Repräsentation unter Beachtung eines durch einen Benutzer vorgegebenen Parameters erfolgt.

4. Verfahren nach einem der vorangehenden Ansprüche, wobei die Repräsentation unter Beachtung eines Attributs erfolgt.

5. Verfahren nach Ansprüchen 3 oder 4, wobei eine Größe und/oder Form der Fläche auf der Basis des Parameters beziehungsweise des Attributs bestimmt wird.

6. Verfahren nach einem der vorangehenden Ansprüche, wobei die Repräsentation in Abhängigkeit einer Größe und/oder Auflösung der Anzeigefläche erfolgt.

7. Verfahren nach einem der vorangehenden Ansprüche, wobei die Repräsentation derart auf der Anzeigefläche angeordnet wird, dass sie vollständig dargestellt wird.

8. Verfahren nach einem der vorangehenden Ansprüche, wobei die Fläche derart bestimmt wird, dass ein vorbestimmter Abstand zwischen der Repräsentation und einer angrenzenden Fläche besteht.

9. Verfahren nach einem der vorangehenden Ansprüche, wobei die Fläche derart bestimmt wird, dass ein vorbestimmter Abstand zwischen der Repräsentation und einer Begrenzung der Anzeigefläche besteht.

10. Verfahren nach einem der vorangehenden Ansprüche, wobei eine Vielzahl von Flächen zur Aufnahme zugeordneter Repräsentationen von Informationen angeordnet wird.

11. Verfahren nach Anspruch 10, wobei mehrere Flächen in einer Fläche zusammengefasst sind.

12. Verfahren nach Anspruch 11, wobei eine zusammenfassende Fläche die gesamte Anzeigefläche abdeckt.

13. Vorrichtung zur Steuerung eines Haushaltsgeräts, wobei die Vorrichtung folgendes umfasst:
- eine Einrichtung zur Erfassung eines Betriebsparameters des Haushaltsgeräts;
- eine Anzeige mit einer vorbestimmten Anzeigefläche; und
- eine Verarbeitungseinrichtung, die dazu eingerichtet ist, eine graphische Repräsentation des Betriebsparameters bereitzustellen; eine Fläche zur Aufnahme der Repräsentation zu bestimmen; und die auf der Anzeigefläche anzuordnen, sodass die Fläche an eine weitere Fläche zur Aufnahme einer weiteren Repräsentation angrenzt.
